# EUROPÄISCHE PATENTSCHRIFT

(11) **EP 0 707 525 B1**
(45) Veröffentlichungstag und Bekanntmachung des Hinweises auf die Patenterteilung: **21.10.1998**
(21) Anmeldenummer: 94918746.2
(22) Anmeldetag: 28.06.1994
(51) Int. Cl.: B23Q 9/00, B23Q 1/60

(54) **HANDWERKZEUGMASCHINE**
HAND MACHINE TOOL
MACHINE-OUTIL MANUELLE

(30) Priorität: 05.07.1993 DE 4322303
(43) Veröffentlichungstag der Anmeldung: 24.04.1996
(73) Patentinhaber: ROBERT BOSCH GMBH, 70442 Stuttgart (DE)
(72) Erfinder: BRAUNBACH, Karl-Heinz, D-72636 Frickenhausen (DE); MATZO, David, D-70771 Leinfelden-Echterdingen (DE); FUCHS, Rudolf, D-73765 Neuhausen (DE)
(86) Internationale Anmeldenummer: DE9400741
(87) Internationale Veröffentlichungsnummer: WO9501852

(56) Entgegenhaltungen:
- WO-A-92/17314
- DE-U- 9 206 828
- FR-A- 1 403 825
- US-A- 3 298 407

## Beschreibung

### Stand der Technik

Die Erfindung geht aus von einer Handwerkzeugmaschine nach der Gattung des Anspruchs 1 bzw. von einer Grundplatte mit Nutträger nach des Gattung des Anspruchs 12.

Eine durch die EP-A2-437 753 bekannte Handkreissäge hat eine Grundplatte, die eine verschiebbare Konsole trägt, an der ein Führungsschuh mit Führungsnut zum Übergreifen der Führungsrippe einer Führungsschiene befestigt ist.
Die Position der Konsole ist gemeinsam mit dem Führungsschuh gegenüber der Grundplatte in deren Ebene einstellbar. Damit kann die Grundplatte bzw. das Sägeblatt gegenüber der Führungsnut zum Vorritzen parallel verschoben werden. In einer ersten Position des Sägeblattes wird in die Werkstückoberfläche eine Nut mit nur geringer Tiefe eingesägt. Zum anschließenden Durchtrennen des Werkstückes wird das Sägeblatt in eine eng neben der vorgeritzten Nut bzw. in diese übergehende, parallelverschobene Position gebracht. Nach dem Vorritzen kann ohne Splittern der Werkstuckoberfläche ein Schnittkanal gesägt werden.

Mit Hilfe der Verstell-Mechanik kann auch die optimale Grundposition der Handwerkzeugmaschine gegenüber einer Führungsschiene eingestellt werden, so daß die Führungsschiene als Spanbrecher dienen und einem Splittern der Werkstückoberfläche auch ohne Vorritzen entgegengewirkt werden kann.

Die Konsole mit den Verschiebemitteln und den Befestigungsmitteln für den Führungsschuh besteht aus einer Vielzahl von Einzelteilen, hat einen komplizierten Aufbau und erhöht das Eigengewicht der Handkreissäge. Der Montage- und Herstellungsaufwand für den Verstellmechanismus ist hoch.

Der Führungsschuh trägt einen über eine Stellschraube verstellbaren Einsatz aus Kunststoff zum Beeinflussen des Laufspiels zwischen Führungsschiene und Grundplatte. Dadurch werden der Herstellungsaufwand für die Handkreissäge erhöht und die Handhabung erschwert.

### Vorteile der Erfindung

Die erfindungsgemäße Handwerkzeugmaschine bzw. Grundplatte mit Nutträger mit den Merkmalen des Anspruchs 1 bzw. des Anspruchs 12 hat den Vorteil hoher Robustheit, geringen Gewichts, geringer Herstellungskosten, gleichbleibender, hoher Genauigkeit und bequemer, sicherer Handhabung.

Weitere vorteilhafte Ausgestaltungen der Erfindung ergeben sich aus den abhängigen Ansprüchen.

### Zeichnung

Ein Ausführungsbeispiel der Erfindung ist in der nachfolgenden Beschreibung anhand der zugehörigen Zeichnung näher erläutert.

Durch die US-A-3 298 407 ist eine Handwerkzeugmaschine nach dem Oberbegriff des Anspruchs 1 bekannt, bei der zwei Nutträger vorhanden sind, die separat justierbar sind und sich beim Justieren der Grundplatte gegenüber der Führungsnut wechselseitig beeinflussen. Dadurch ist der Justiervorgang umständlich.

Durch die WO-A-92/17314 ist eine Handwerkzeugmaschine nach dem Oberbegriff des Anspruchs 1 bekannt, bei der die Nut in der Grundplatte durch Ausstanzungen gebildet wird, die an zwei voneinander beabstandeten Stellen die Nutbreite nichtjustierbar bestimmen. Dadurch ist ein Justieren der Grundplattenposition gegenüber der Führungsrippe nicht möglich.

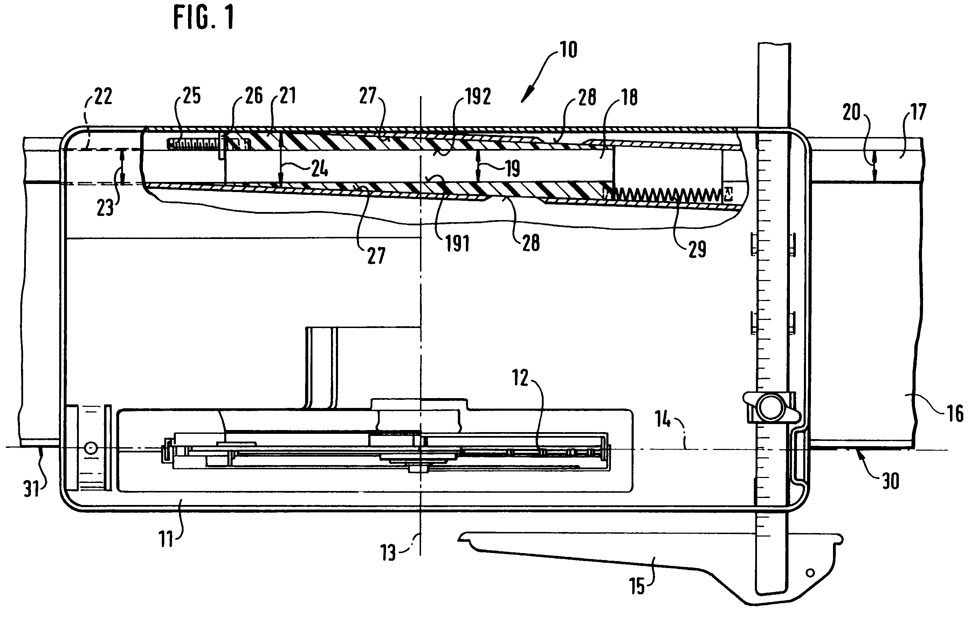

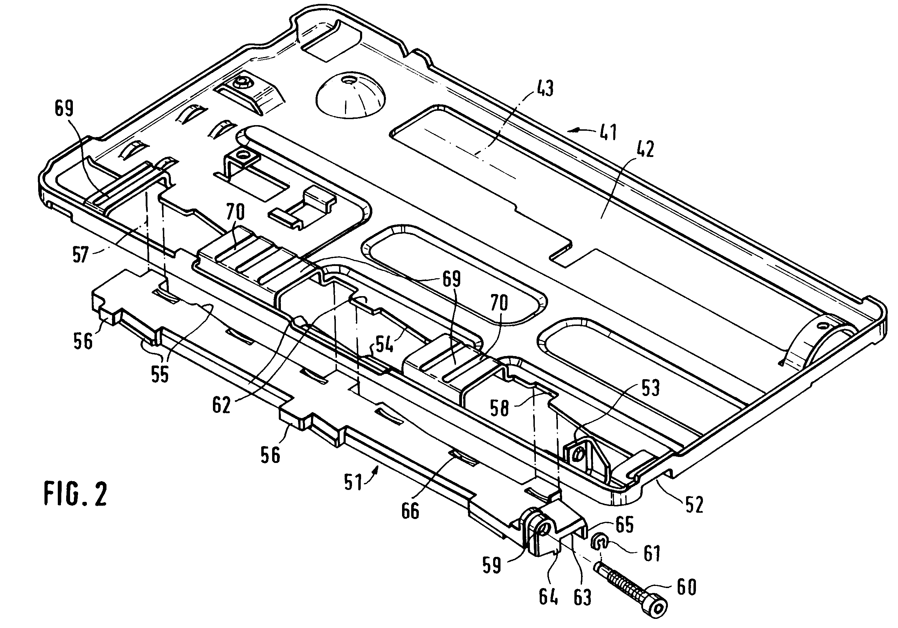

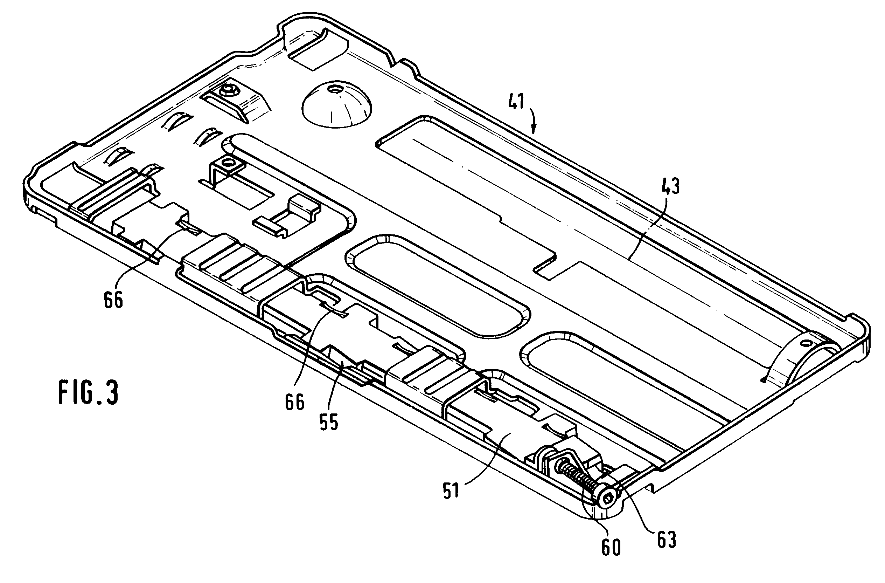

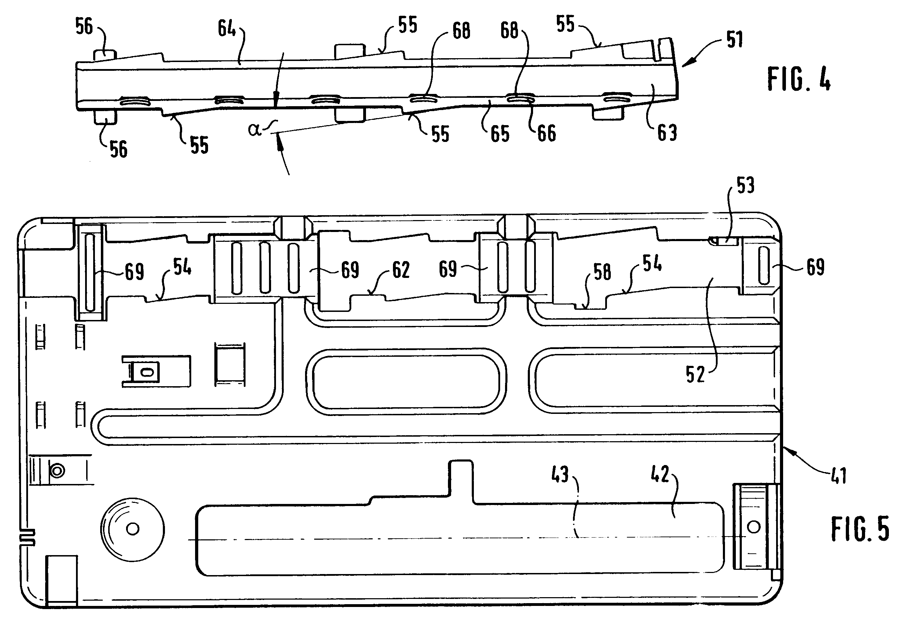

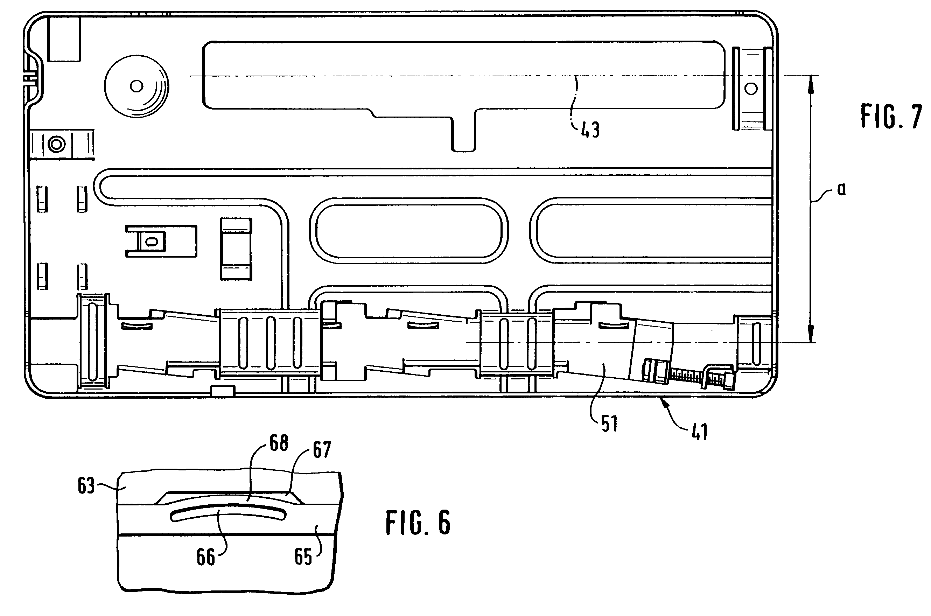

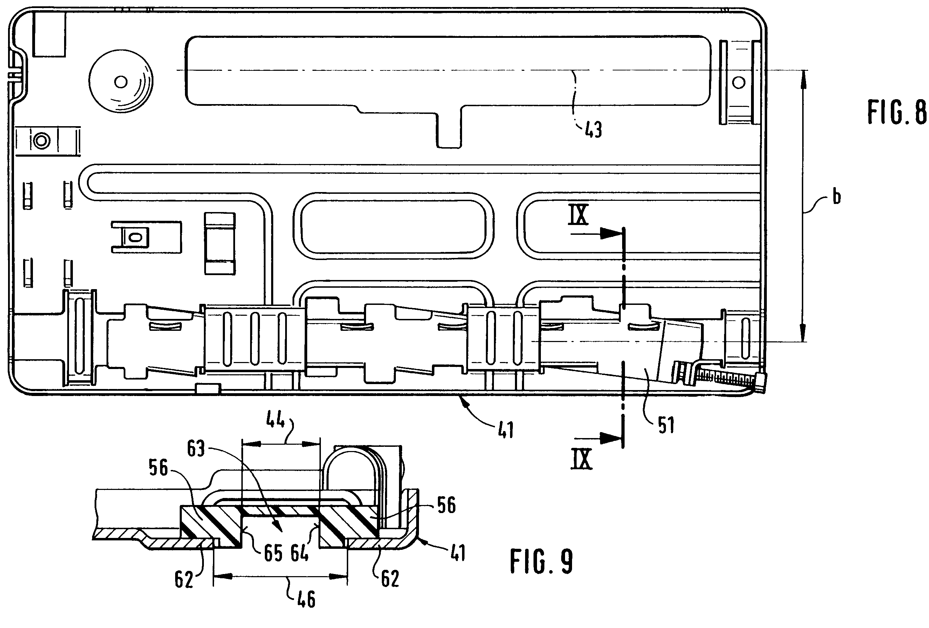

Es zeigen Figur 1 eine teilweise geschnittene Draufsicht auf eine erfindungsgemäße Handkreissäge, Figur 2 eine Explosionsdarstellung der Grundplatte und des Nutträgers, Figur 3 eine Draufsicht der Grundplatte mit eingesetztem Nutträger, Figur 4 einen Nutträger von unten betrachtet, Figur 5 eine Grundplatte von unten betrachtet, Figur 6 einen Ausschnitt aus dem Nutträger gemäß Figur 4, die Figuren 7 und 8 je eine Draufsicht auf die Grundplatte mit eingesetztem Nutträger in je einer entgegengesetzten Extremposition des Nutträgers und Figur 9 eine seitliche Schnittdarstellung der Grundplatte mit Nutträger.

### Beschreibung des Ausführungsbeispiels

Die in Figur 1 in der Draufsicht gezeigte Handkreissäge 10 zeigt eine Grundplatte 11, die ein Sägeblatt 12 mit einer Sagewellenachse 13 und den nicht näher erläuterten bzw. nicht dargestellten Teilen Sägeblattgehäuse, Motor, Antriebsgehäuse und dergl. trägt. Die Normalprojektion des Sägeblattes 12 auf die Ebene der Grundplatte 11 bzw. auf ein Werkstück definiert eine Werkzeugeingriffslinie 14. Die Grundplatte 11 trägt einen Seitenanschlag 15, der gegenüber der Grundplatte 11 in nicht näher erläuterten Führungsmitteln verstellbar und feststellbar ist.

Die Grundplatte 11 liegt auf einer Führungsschiene 16 auf.
Entlang einer Führungsrippe 17 der Führungsschiene 16 ist eine sich an dieser beidseitig abstützende, übergreifende Führungsnut 18 der Grundplatte 11 gesetzt. Die Führungsnut 18 mit den deren Breite 19 bestimmenden Seitenflächen 191, 192 ist geringfügig breiter als die Führungrippe 17, so daß zwischen diesen ein leichtes Querspiel besteht.

Die Führungsnut 18 ist Teil eines langgestreckten Nutträgers 21, der als gesondertes Teil in einen Führungskanal 22 von der Unterseite der Grundplatte 11 her in diese eingesetzt ist. Die Weite 23 sowie die Höhe des Führungskanals 22 entsprechen der Außenbreite 24 bzw. der Höhe des Nutträgers 21. Der Nutträger 21 ist im Führungskanal 22 mittels einer Stellschraube 25 längsverschiebbar angeordhet. Die Stellschraube 25 ist an einem Innengewindeteil 26 der Grundplatte 11 dreh- und verschiebbar und am Nutträger 21 drehbar, axial unverschieblich festgehalten. Der Führungskanal 22 hat in dem Bereich, in dem er den Nutträger 21 aufnimmt, zueinander parallel und durchgehend, in der Eben der Grundplatte, schräg zur Führungsnut 18 verlaufende Seitenwände. Diese dienen als Führungsschrägen 27 für die zueinander parallel, durchgehend schräg zur Führungsnut 18 angeordheten Außenwände des Nutträgers 21. Die Außenwände dienen als Gleitschrägen 28.

An einer der Stellschraube 25 abgewandten Stirnseite des Nutträgers 21 stützt sich eine als Druckfeder ausgestaltete Führungsfeder 29 mit Rückstellwirkung gegenüber der Grundplatte 11 ab.

Die der Führungsrippe 17 ferne, parallele Längskante 30 der Führungsschiene 16 dient zum Anlegen an ein Werkstück entlang einem vorgesehenen Schnittverlauf. Unter der Führungsschiene 16 ist eine Gummilippe 31 über die Längskante 30 hervorstehend angeordnet, die als Spanbrecher bzw. als Werkstückschoner dient und die beim Sägen das Splittern am Schnittkanal bzw. das Zerkratzen des Werkstücks beim Verschieben der Führungsschiene 16 verhindert.

In Figur 2 ist eine weitere Ausführungsform einer Grundplatte 41 gezeigt. Diese trägt auf einer Längsseite einen Durchtrittsschlitz 42 für ein nicht dargestelltes Sägeblatt.
Darin verläuft die strichpunktiert gezeichnete Werkzeugeingriffslinie 43. Parallel, nahe der anderen Längsseite, verläuft ein Führungskanal 52, in dem ein Nutträger 51 mit einer Führungsnut 63 mit Seitenwänden 63, 64 verschiebbar gelagert ist. Eine mit dem Nutträger 51 axial unverschieblich gekoppelte Stellschraube 60 ist in einem Innengewindeteil 53 der Grundplatte 41 spindelartig gelagert.
Der Führungskanal 52 wird durch eine mittels Überbrückungen 69 mehrfach überbrückte Ausnehmung gebildet.

Die Seitenwände des Führungskanals 52 sind mit stufenartigen Führungsschrägen 54 versehen, an denen sich die Gleitschrägen 55 des Nutträgers 51 entlang einem vorgesehenen Verschiebeweg abstützen.

Auf die gleiche Weise sind die beidseitigen Gleitschrägen 55 des Nutträgers 51 stufenartig unterbrochen angeordnet. Durch Parallelversatz der keilartigen, die Gleitschrägen 55 tragenden seitlichen Vorsprünge wurde die Baubreite des Nutträgers 51 auf ein Minimum reduziert. Der Nutträger 51 ist außerdem beidseitig mit blockartigen vorspringenden Stützen 56 versehen. Mit diesen Stützen 56 wird der Nutträger 51 entlang der gestrichelt gezeichneten Montagenormalen 57 durch Aussparungen 58 in die Grundplatte 41 eingeführt und dann in Betrachtungsrichtung nach rechts verschoben. Die Stützen 56 liegen dann mit ihren Grundflächen auf je einem Vorsprung 62 auf. Der Nutträger 51 ist dadurch gegen Verlieren bzw. gegen Entnahme nach unten gesichert. Der Nutträger 51 weist auf der in Betrachtungsrichtung rechten Seite eine Lagerbohrung 59 auf, in der die Stellschraube 60 mittels Sicherungsblech 61 gegen axiale Verschiebung gesichert, drehbar angeordnet ist.

Die Überbrückungen 69 des Führungskanals 52 sind mit Gleitsicken 70 versehen, gegen die sich der Nutträger 51 abstützt, wobei die Berührungsfläche zwischen der Grundplatte 41 und dem Nutträger 51 verringert wird. Der Nutträger 51 trägt parallel zur Seitenwand 65 in dieser die Stanzungen 67, die die Nutgrundwand durchtreten. Durch diese werden die in Fig. 4 näher erläuterten, durch die bogenförmigen Ausstanzungen 66 gebildeten, gewölbten Blattfedern 68 in der Seitenwand 65 gebildet, die die Breite der Führungsnut 63 elastisch begrenzen.

In Figur 3 ist die Grundplatte 41 mit montiertem Nutträger 51, wie zu Figur 2 beschrieben, in seiner in Betrachtungsrichtung nach rechts am weitesten verschobenen Stellung gezeigt. Hier hat die Führungsnut 63 gegenüber der Werkzeugeingriffslinie 43 einen Höchstabstand. Übertragen auf die Figur 1 folgt daraus, daß in dieser Position des Nutträgers 21 gegenüber der Grundplatte 11 das Sägeblatt 12 gegenüber der Längskante 29 der Führungsschiene 16 ebenfalls einen Höchstabstand aufweist.

In Figur 4 ist ein Nutträger 51 gemäß Figur 2 und 3 von unten betrachtet gezeigt. Erkennbar sind die Führungsnut 63, die stufenartig mit Gleitschrägen 55 versehenen Seitenwände 64, 65, die unter dem Winkel zur Nut 63 angeordnet sind, sowie die Stützen 56 und die bogenförmigen Ausstanzungen 66 durch die Wandung des Nutgrundes mit den Stanzungen 67 in der Seitenwand 65 des Nutträgers 51 und die Blattfedern 68 erkennbar. Zwischen den Stanzungen 67 und der Führungsnut 63 bleibt ein dünnwandiger Bereich der Seitenwand 65 wie eine vorgewölbte Blattfeder 68 stehen.

Die in Figur 5 gezeigte Ansicht der Grundplatte 41 von unten mit dem Durchtrittsschlitz 42, der Werkzeugeingriffslinie 43, dem Führungskanal 52 zur Aufnahme des Nutträgers 51, dem Innengewindeteil 53, den mehrfachen Überbrückungen 69, den stufenartig unterbrochenen Seitenwänden des Führungskanals 52 mit Führungsschrägen 54, den Aussparungen 58 und den Vorsprüngen 62.

In der Figur 6 ist ein Ausschnitt des Nutträgers 51 gezeigt, wobei eine bogenförmige Stanzung 66 mit einer Ausstanzung 67 aus der Seitenwand 65 und die Führungsnut 63 vergrößert dargestellt sind. Die bogenförmige Stanzung 66 ist in der Seitenwand 65, und die Ausstanzung 66 im Nutgrund zu erkennen.
Die Stanzung 66 bewirkt, daß die Blattfeder 68 gegenüber dem Nutgrund bewegbar ist.

In den Figuren 7, 8 ist die Grundplatte 41 von oben gesehen als Einzelheit mit dem Nutträger 51 in jeweils entgegengesetzten Extremlagen zu erkennen, wobei die Abstände a, b der Führungsnut-Mitte zur Werkzeugeingriffslinie 43 jeweils entgegengesetzte Extremwerte hat.

In Figur 9 ist das Profil der Grundplatte 41 im Schnitt IX-IX, Fig. 8, mit eingesetztem Nutträger 51 gezeigt. Hier ist zu erkennen, daß an der Unterseite der Grundplatte 41 auch im Bereich der Vorsprünge 62 der Führungskanal 52 breiter als der Nutträger 51 bzw. als die Führungsnut 63 ist.

Das Einstellen der Lage der Führungsnut 18; 63 d.h. des Nutträgers 21; 51 gegenüber der Grundplatte 11, 41 geschieht wie folgt: Durch Drehen der Stellschraube 25; 60 wird der Nutträger 21; 51 längs zum Führungskanal 22; 52 gegenüber der Grundplatte 11; 41 verschoben. Dabei gleitet der Nutträger 21; 51 mit seinen Gleitschrägen 28; 55 (bzw. mit seiner Außenwand) an den Führungsschrägen 27, 54 (bzw. an den Kanalseitenwänden) entlang schräg im Führungskanal 22; 52. Dabei bleibt die Führungsnut 18; 63 stets parallel zur Ausgangslage ausgerichtet. Bei diesem Längshub erfährt der Nutträger 21; 51 bzw. die Führungsnut 18; 63 einen Querhub. Der Querhub ist abhängig vom Winkel der Führungsschrägen 54 bzw. der Gleitschrägen 55. Je größer der Winkel (Fig. 4) ist, desto größer ist der Anteil der Querverschiebung im Verlauf der Längsverschiebung des Nutträgers 21; 51.

Die Führungsnut 18, 63 im Nutträger 21, 51 kann mit verhältnismäßig grober Toleranz gefertigt werden, ohne daß das Spiel zwischen Führungsnut 63 und Führungsrippe 17 der Führungsschiene 16 zu groß wird. Dies wird durch die seitlich in die Führungsnut 18, 63 hineinragenden Blattfedern 68 erreicht, die in der Seitenwand 65 mittels (Aus-)Stanzungen 66, 67 gebildet werden.

Der separate Nutträger 21, 51 ist leicht auswechselbar, falls die Führungsnut 63 bzw. die Blattfedern 68 verschlissen sein sollten.

So können beispielsweise mehrere auswechselbare Nutträger mit unterschiedlicher Breite der Führungsnut zur Verfügung gestellt werden, passend zu marktüblichen Führungsschienen 16 mit unterschiedlich breiten Führungsrippen 17.

Mit dem erfindungsgemäßen, stets präzise gegenüber einer Führungsschiene justierbaren Nutträger ausgerüstete Handwerkzeugmaschinen behalten für den Benutzer über lange Zeit ihren Neuwert. Ein Toleranzausgleich nach einem Sägeblattwechsel kann durch Einstellen des Nutträgers mit geringem Aufwand erreicht werden.

Bei einem nicht dargestellten Ausführungsbeispiel der Erfindung ist der Nutträger mittels einer Schnellverstelleinrichtung in zwei vorbestimmte Stellungen verstellbar, wobei der Querhub etwa einer Sägeblattbreite entspricht. Außerdem ist der Nutträger an einer Seite der Grundplatte freitragend, außen überstehend angeordnet.

In der ersten Verstellposition des Nutträgers kann das Sägeblatt zum Vorritzen - beispielsweise einer furnierten oder laminierten Oberfläche - verwendet werden, in der zweiten Position zum vollständigen Durchtrennen des Werkstückes. Damit wird bei Sägen ein Reißen und Splittern furnierter bzw. laminierter Oberflächen verhindert.

Bei einem weiteren, nicht dargestellten Ausführungsbeispiel der Erfindung kann der Führungskanal für den Nutträger so ausgestaltet sein, daß in seinen Seitenwänden Justierschrauben, beispielsweise Madenschrauben, eingesetzt sind, mit deren Hilfe der Nutträger bzw. die Führungsnutachse bezuglich der Grundplatte justiert werden kann. Dadurch können die Fertigungstoleranzen für die Grundplatte und den Nutträger noch gröber gewählt werden, ohne daß dadurch die Genauigkeit der Nutposition beeinträchtigt wird.

Bei einem anderen, nicht dargestellten Ausführungsbeispiel der Erfindung kann der Nutträger mit der Gehrungswinkelverstellung gekoppelt sein. Wird nun der Gehrungswinkel geändert, ändert sich auch die Position des Nutträgers. Dies ist sinnvoll bei Handkreissägen mit einer Anordnung der Schwenkachse oberhalb der Unterseite der Grundplatte, weil sich hier die Werkzeugeingriffslinie abhängig vom Gehrungswinkel ändert. Die Anderung der Werkzeugeingriffslinie wird dadurch ausgeglichen. Dadurch kann ein einziges fest eingestelltes Schnittvisier für alle Gehrungswinkel verwendet werden. Gehrungsschnitte können mit verbesserter Zielgenauigkeit gefertigt werden.

Durch die Erfindung sind Mittel gegeben, mit denen die Position des Sägeblatts gegenüber einer Führungsschiene auf einfache Weise so justiert werden kann, daß die Werkzeugeingriffslinie in der optimalen Entfernung parallel zur Längskante der Führungsschiene verläuft. Dadurch kann die Längskante bzw. die Gummilippe der Führungsschiene ihre Funktion als Spanbrecher bzw. als Splitterschutz optimal erfüllen.

Das Zuschneiden einer absichtlich überdimensionierten, überstehenden Gummilippe an der Längskante der Führungsschiene auf das jeweilige Abstandsmaß des Sägeblattes bei bekannten Handkreissägen und dadurch geschaffene Paarabhängigkeit zwischen der Handwerkzeugmaschine und der Führungsschiene ist beseitigt. Alle erfindungsgemäßen Handwerkzeuge können gemeinsam auf eine Führungsschiene eingestellt werden. Es entfällt die Notwendigkeit, für mehrere Handwerkzeuge bzw. Handwerkzeugfabrikate je eine gesonderte Führungsschiene zu verwenden.

Falls bei einem kürzeren Verschiebeweg des Nutträgers eine möglichst große seitliche Verschiebung parallel zur Nutachse erreicht werden soll, muß der Winkel (Fig. 4) der Gleitschrägen bzw. der Führungsschrägen steiler gewählt werden.

Die Grundplatte kann kostengünstig als Blechprägeteil hergestellt werden, bei dem der Führungskanal so angeordnet ist, daß nach dem Stanzen und Biegen der Grundplatte die Führungsschrägen für den Nutträger mit einer abschließenden Stanzung in Endmaßqualität erzeugt werden.

Durch die Gestaltung des Preßoder Gießwerkzeugs des Nutträgers sind ohne Mehrkosten die im Nutträger integrierten Blattfedern herstellbar, die die Führungsnut elastisch einengen und durch bogenförmige Ausnehmungen, insbesondere Stanzungen, in zumindest einer von dessen Seitenwänden gebildet werden.

Der Nutträger wird in der Grundplatte spielfrei und reibungsarm durch schienenartige Gleitsicken auf der Grundfläche des Führungskanals bzw. auf der Rückseite des Nutträgers gehalten.

Es ist vorteilhaft, den Nutträger entlang der Nutachse konvex oder konkav gewölbt herzustellen, so daß der Nutträger in die Grundplatte blattfederartig vorgespannt gegen Vibrationen und gegen Verlieren gesichert gehalten wird.

Die Erfindung ist bei allen handgeführten Werkzeugmaschinen, beispielsweise auch bei Stichsägen, Oberfräsen, Schattenfugenfräsen, Tackern, Nagern und dergleichen vorteilhaft anzuwenden.

## Patentansprüche

1. Handwerkzeugmaschine (10), insbesondere Handkreissäge, mit einem Maschinengehäuse mit einer Grundplatte (11, 41) und mit einer Führungsnut (18, 63) zum Übergreifen einer Führungsrippe (17) einer Führungsschiene (16) zum geführten Verschieben der Handwerkzeugmaschine (10) über ein Werkstuck, wobei die Führungsnut (18, 63) in einem gegenüber der Grundplatte (11, 41) gesonderten, gegen Verlieren gesicherten Nutträger (21, 51) angeordnet ist, der quer zur Führungsnut in der Ebene der Grundplatte (11, 41) verstellbar ist, dadurch gekennzeichnet,
daß der Nutträger (21, 51) bei seiner Längsverschiebung entlang Schrägführungen (27, 28; 54, 55) gegenüber der Grundplatte (11, 41) verstellbar ist.

2. Handwerkzeugmaschine nach Anspruch 1, dadurch gekennzeichnet, daß die Grundplatte (11, 41) den Nutträger (21, 51) an der der Führungsschiene (16) zugewandten Fläche trägt.

3. Handwerkzeugmaschine nach Anspruch 1 oder 2, dadurch gekennzeichnet, daß die der Führungsschiene (16) zugewandte Fläche der Grundplatte (11, 41) einen Führungskanal (22, 52) bildet, dessen inneren Seiten (27; 54) im wesentlichen zu den äußeren Seiten (28; 55) des Nutträgers (21, 51) kongruent sind.

4. Handwerkzeugmaschine nach Anspruch 3, dadurch gekennzeichnet, daß der Führungskanal (22, 52) durch eine überbrückte Ausnehmung in der Grundplatte (11, 41) gebildet wird.

5. Handwerkzeugmaschine nach Anspruch 3 oder 4, dadurch gekennzeichnet, daß der Führungskanal (22, 52) Gleitsicken (70) trägt, gegen die sich der Nutträger (21, 51) abstützt.

6. Handwerkzeugmaschine nach einem der vorhergehenden Ansprüche, dadurch gekennzeichnet, daß Verstellmittel (24, 25, 59, 60) zum Verschieben des Nutträgers (21, 51) gegenüber der Grundplatte (11, 41), insbesondere ein Schraubtrieb, an der Grundplatte (11, 41) angeordnet sind.

7. Handwerkzeugmaschine nach einem der vorhergehenden Ansprüche, dadurch gekennzeichnet, daß der Nutträger (21, 51) ein langgestrecktes Teil, insbesondere aus elastischem Kunststoff, mit u-förmigem Querschnitt ist.

8. Handwerkzeugmaschine nach einem der vorhergehenden Ansprüche, dadurch gekennzeichnet, daß mindestens eine Außenlängskante (28; 55) des Nutträgers (21; 51) zumindest teilweise, insbesondere gegenüber der Achse des Nutträgers (21; 51) in der Ebene der Grundplatte (11; 41) winklig verlaufend, als Gleitschräge (28; 55) ausgestaltet ist, die sich an der Grundplatte (11; 41), insbesondere an den Seiten (27; 54) ihres Führungskanals (22; 52), abstützt.

9. Handwerkzeugmaschine nach einem der vorhergehenden Ansprüche, dadurch gekennzeichnet, daß Federelemente (68) zum Beeinflussen des Laufspiels zwischen der Führungsnut (63) und der Führungsrippe (17) der Führungsschiene (16) elastisch verengend in die Führungsnut (63) ragen.

10. Handwerkzeugmaschine nach Anspruch 9, dadurch gekennzeichnet, daß die Federelemente (68) in den Nutträger (51) integriert sind und durch bogenförmige Ausnehmungen, insbesondere Stanzungen oder Ausstanzungen (66, 67) in zumindest einer von dessen Seitenwänden (64, 65) gebildet werden.

11. Handwerkzeugmaschine nach einem der vorhergehenden Ansprüche, dadurch gekennzeichnet, daß der Nutträger (21, 51) und/oder die Grundplatte (11, 41) und/oder die Stellschraube (25, 60) Mittel zur Positionskontrolle, insbesondere eine Skala, trägt.

12. Grundplatte mit Nutträger für eine Handwerkzeugmaschine (10), insbesondere Handkreissäge, mit einem Maschinengehäuse, mit einer Führungsnut (18, 63) zum Übergreifen einer Führungsrippe (17) einer Führungsschiene (16) zum geführten Verschieben der Handwerkzeugmaschine (10) über ein Werkstück, wobei die Führungsnut (18, 63) in dem gegenüber der Grundplatte (11, 41) gesonderten, gegen Verlieren gesicherten Nutträger (21, 51) angeordnet ist, der quer zur Führungsnut in der Ebene der Grundplatte (11, 41) verstellbar ist,
dadurch gekennzeichnet, daß die Grundplatte (11, 41) Verstellmittel (24, 25, 59, 60) zum Längsverschieben des länglichen, insbesondere aus elastischem Kunststoff bestehenden, Nutträgers (21, 51) trägt, der außen Abstützmittel aufweist, die als Vorsprünge und/oder Gleitschrägen (28; 55) ausgestaltet sind und die sich, unverlierbar, an der Grundplatte (11, 41) abstützen, die eine als Führungskanal für den Nutträger (21, 51) dienende Ausnehmung trägt, die breiter als der Nutträger (21, 51) ist und deren die Breite bestimmenden Bereiche der inneren Längsseiten (54, 62) beidseitig als Vorsprünge (62) und/oder Führungsschrägen (22, 54) zum führenden, gegen Verlieren gesicherten, Abstützen der Seiten des Nutträgers (21, 51) ausgestaltet sind, derart, daß ein Längshub des Nutträgers (21, 51), insbesondere mittels der Verstellmittel (24, 25, 59, 60) gegenüber der Grundplatte (11, 41), dessen Querhub bewirkt.

13. Grundplatte mit Nutträger nach Anspruch 12, dadurch gekennzeichnet, daß die Gleitschrägen (28; 55) des Nutträgers (21, 511) so ausgestaltet sind, daß bei deren Aufgleiten an Führungsschrägen (54) der Grundplatte (11; 41) einer Handwerkzeugmaschine der Längshub größer als der Querhub ist und daß der Nutträger (21, 511) in die Führungsnut (63) ragende, insbesondere integrierte, Blattfedern (68) trägt.

## Claims

1. Hand-held power tool (10), particularly a hand-held circular saw, comprising a machine casing provided with a base plate (11, 41), and a guide slot (18, 63) for engaging over a guide rib (17) of a guide rail (16) for the guided movement of the hand-held power tool (10) over a workpiece, the guide slot (18, 63) being arranged in a slot carrier (21, 51) which is separate from the base plate (11, 41) and is held captive and which in the plane of the base plate (11, 41) is movable transversely to the guide slot, characterized in that in its longitudinal displacement along sloping guides (27, 28;54, 55) the slot carrier (21, 51) is displacable relative to the base plate (11, 41).

2. Hand-held power tool according to Claim 1, characterized in that the base plate (11, 41) carries the slot carrier (21, 51) on the surface facing the guide rail (16).

3. Hand-held power tool according to Claim ?, characterized in that that surface of the base plate (11, 41) which faces the guide rail (16) forms a guide channel (22, 52) whose inner sides (27; 54) are substantially congruent to the outer sides (28; 55) of the slot carrier (21, 51).

4. Hand-held power tool according to Claim 3, characterized in that the guide channel (22, 52) is formed by a bridged-over recess in the base plate (11,41).

5. Hand-held power tool according to Claim 3 or 4, characterized in that the guide channel (22, 52) is provided with slide beads (70) against which the slot carrier (21, 51) is supported.

6. Hand-held power tool according to one of the preceding claims, characterized in that displacement means (24, 25, 59, 60), particularly a screw drive, are arranged on the base plate (11, 41) for the purpose of moving the slot carrier (21, 51) relative to the base plate (11, 41).

7. Hand-held power tool according to one of the preceding claims, characterized in that the slot carrier (21, 51) is an elongated part, particularly of elastic plastics material, which has a U-shaped cross-section.

8. Hand-held power tool according to one of the preceding claims, characterized in that at least one outer longitudinal edge (28; 55) of the slot carrier (21; 51) is at least partly formed as a slide slope (28; 55) which extends at an angle, particularly relative to the axis of the slot carrier (21; 51), in the plane of the base plate (11; 41), and which is supported on the base plate (11; 41), particularly on the sides (27; 54) of its guide channel (22; 52).

9. Hand-held power tool according to one of the preceding claims, characterized in that spring elements (68) for controlling the play between the guide slot (63) and the guide rib (17) of the guide rail (16) project elastically with a narrowing action into the guide slot (63).

10. Hand-held power tool according to Claim 9, characterized in that the spring elements (68) are integrally formed in the slot carrier (51) and consist of curved recesses, particularly stamped or stamped-out portions (66, 67) in at least one of its side walls (64, 65).

11. Hand-held power tool according to one of the preceding claims, characterized in that the slot carrier (21, 51) and/or the base plate (11, 41) and/or the adjusting screw (25, 60) carries position control means, particularly a scale.

12. Base plate, provided with a slot carrier, for a hand-held power tool (10), particularly a hand-held circular saw, comprising a machine casing provided with a base plate (11, 41), and a guide slot (18, 63) for engaging over a guide rib (17) of a guide rail (16) for the guided movement of the hand-held power tool (10) over a workpiece, the guide slot (18, 63) being arranged in the slot carrier (21, 51) which is separate from the base plate (11, 41) and is held captive and which in the plane of the base plate (11, 41) is displaceable transversely to the guide slot, characterized in that the base plate (11, 41) carries displacement means (24, 25, 59, 60) for the longitudinal movement of the elongated slot carrier (21, 51), which is in particular made of elastic plastics material and which on the outside carries support means which are in the form of projections and/or slide slopes (28; 55) and which are supported and held captive on the base plate (11, 41) , which carries a recess serving as a guide channel for the slot carrier (21, 51), said recess being wider than the slot carrier (21, 51), while those regions of its inner longitudinal sides (54, 62) which determine its width are formed on both sides as projections (62) and/or guide slopes (22, 54) for guiding and supporting, while holding captive, the sides of the slot carrier (21, 51), in such a manner that a longitudinal stroke of the slot carrier (21, 51), particularly with the aid of the displacement means (24, 25, 59, 60), relative to the base plate (11, 41) brings about its transverse stroke.

13. Base plate provided with a slot carrier according to Claim 12, characterized in that the slide slopes (28;55) of the slot carrier (21, 511) are designed such that when they slide on guide slopes (54) of the base plate (11; 41) of a hand-held power tool the longitudinal stroke is greater than the transverse stroke and that the slot carrier (21, 511) carries leaf springs (68) which project into the guide slot (63) and which in particular are integrally formed in it.

## Revendications

1. Machine-outil manuelle (10), en particulier scie circulaire, comprenant un boitier, une plaque de base (11, 41), une rainure de guidage (18, 63) venant en prise par dessus avec une nervure de guidage (17) portée par un rail de guidage (16) afin de guider le coulissement de la machine-outil manuelle (10) sur une pièce, la rainure de guidage (18, 63) faisant partie d'un porte-rainure (21, 51) spécifique destiné à la plaque de base (11, 41) mais garanti contre sa perte et qui peut être déplacé dans le plan de la plaque de base (11, 41) perpendiculairement à la rainure de guidage,
caractérisée en ce que
le porte-rainure (21, 51) peut être déplacé par rapport à la plaque de base (11, 41) en coulissant selon sa direction longitudinale le long de guidages obliques (27, 28 ; 54, 55).

2. Machine-outil manuelle selon la revendication 1,
caractérisée en ce que
la plaque de base (11, 41) porte le porte-rainure (21, 51) sur sa surface en regard du rail de guidage (16).

3. Machine-outil manuelle selon la revendication 1 ou 2,
caractérisée en ce que
la surface de la plaque de base (11, 41) en regard du rail de guidage (16) présente un canal de guidage (22, 52) dont les faces internes (27 ; 54) coincident essentiellement avec les faces externes (28 ; 55) du porte-rainure (21, 51).

4. Machine-outil manuelle selon la revendication 3,
caractérisée en ce que
le canal de guidage (22, 52) est constitué par un évidement ponté pratiqué dans la plaque de base (11, 41).

5. Machine-outil manuelle selon la revendication 3 ou 4
caractérisée en ce que
le canal de guidage (22, 52) porte des sillons de glissement (70) sur lesquels s'appuie le porte-rainure (21, 51).

6. Machine-outil manuelle selon une des revendications précédentes,
caractérisée en ce que
des moyens de déplacement (24, 25, 59, 60), en particulier un entraînement à vis, sont montés sur la plaque de base (11, 41) pour faire coulisser le porte-rainure (21, 51) par rapport à cette plaque de base.

7. Machine-outil manuelle selon une quelconque des revendications précédentes,
caractérisée en ce que
le porte-rainure (21, 51) est une pièce allongée, faite en particulier de matière plastique et présentant une section en U.

8. Machine-outil manuelle selon l'une des revendications précédentes,
caractérisée en ce qu'
au moins un bord longitudinal externe (28 ; 55) du porte-rainure (21, 51) présente, au moins en partie, la forme d'une rampe oblique de glissement (28 ; 55) faisant dans le plan de la plaque de base (11 ; 41) un angle avec l'axe du porte-rainure (21, 51), cette rampe s'appuyant en particulier sur les côtés (27 ; 54) du canal de guidage (22 ; 52)

9. Machine-outil manuelle selon l'une quelconque des revendications précédentes,
caractérisée en ce que
des éléments élastiques (68) pour agir sur le jeu existant entre la rainure de guidage (63) et la nervure de guidage (17) du rail de guidage (16) pénètrent dans la rainure de guidage (63) en la rétrécissant élastiquement.

10. Machine-outil manuelle selon la revendication 9,
caractérisée en ce que
les éléments élastiques (68) sont intégrés au porte-rainure (51) et sont constitués par des parties creusées en arc, en particulier des empreintes ou des parties estampées (66, 67) pratiquées dans au moins une de ses parois latérales (64, 65).

11. Machine-outil manuelle selon l'une quelconque des revendications précédentes,
caractérisée en ce que
le porte-rainure (21, 51) et la plaque de base (11, 41) et/ou la vis de réglage (25, 60) porte des moyens de contrôle de position, en particulier une règle graduée.

12. Plaque de base avec porte-rainure pour une machine-outil manuelle (10), en particulier une scie circulaire, comprenant un boîtier, une rainure de guidage (18, 63) venant en prise par dessus avec une nervure de guidage (17) portée par un rail de guidage (16) afin de guider le coulissement de l'outil (10) sur une pièce, la rainure de guidage (18, 63) faisant partie d'un porte-rainure (21, 51) spécifique destiné à la plaque de base mais garanti contre sa perte et qui peut être déplacé dans le plan de la plaque de base (11, 41) perpendiculairement à la rainure de guidage,
caractérisée en ce que
- la plaque de base (11, 41) porte des moyens de déplacement (24, 25, 59, 60) pour faire coulisser longitudinalement le porte-rainure de forme allongée, constitué en particulier de matière plastique,
- le porte-rainure (21, 51) comporte extérieurement des moyens d'appui constitués par des parties en saillie et/ou des rampes obliques de glissement (28 ; 55) ces moyens imperdables s'appuyant sur la plaque de base (11, 41) qui présente un évidement servant de canal de guidage au porte-rainure (21, 51),
- l'évidement précédent est plus large que le porte-rainure (21, 51) et les zones des faces internes longitudinales (54, 62) qui définissent la largeur de cet évidement ont des deux côtés la forme de saillies (62) et/ou de rampes obliques de guidage (22, 54) pour servir d'appui de guidage et de garantir contre la perte, aux côtés du porte-rainure (21, 51), de manière qu'un déplacement longitudinal du porte-rainure par rapport à la plaque de base, en particulier sous l'action des moyens de déplacement (24, 25, 59, 60), produit un déplacement transversal du porte-rainure (21, 51).

13. Plaque de base avec porte-rainure selon la revendication 12,
caractérisée en ce que
les rampes obliques de glissement (28 ; 55) du porte-rainure (21, 51) sont conçues de manière que leur glissement le long des guidages obliques (54) de la plaque de base (11 ; 41) donne à une machine-outil manuelle une course longitudinale plus importante que sa source transversale, et que le porte-rainure (21, 51) est équipé de ressorts à lame (68), de préférence intégrés, pénétrant dans la rainure de guidage (63).
